# EUROPEAN PATENT SPECIFICATION

(11) **EP 2 032 345 B1**
(45) Date of publication and mention of the grant of the patent: **05.05.2010**
(21) Application number: 07719222.7
(22) Date of filing: 20.06.2007
(51) Int. Cl.: B29C 67/00, B23K 26/03, B29C 67/04, B22F 3/10

(54) **PROCEDURE AND APPARATUS FOR IN-SITU MONITORING AND FEEDBACK CONTROL OF SELECTIVE LASER POWDER PROCESSING**
VERFAHREN UND VORRICHTUNG ZUR IN-SITU-ÜBERWACHUNG UND RÜCKKOPPLUNGSSTEUERUNG SELEKTIVER LASERPULVERBEARBEITUNG
PROCÉDURE ET APPAREIL POUR LA SURVEILLANCE IN SITU ET LA COMMANDE PAR RÉTROACTION D'UN TRAITEMENT SÉLECTIF DE POUDRE LASER

(30) Priority: 20.06.2006 GB 0612204; 27.04.2007 GB 0708204
(43) Date of publication of application: 11.03.2009
(73) Proprietor: Katholieke Universiteit Leuven, 3000 Leuven (BE)
(72) Inventor: KRUTH, Jean-Pierre, B-3001 Heverlee (BE); MERCELIS, Peter, B-2460 Kasterlee (BE)
(74) Representative: Hafner, Dieter
(86) International application number: PCT/BE2007/000061
(87) International publication number: WO 2007/147221

(56) References cited:
- EP-A- 1 388 411
- WO-A-95/11100
- US-B1- 6 791 057

## Description

### FIELD OF THE INVENTION

The present invention relates to a method according to claim 10 and a device according to claim 1 to monitor and control Selective Laser Powder Processing technologies.

### BACKGROUND OF THE INVENTION

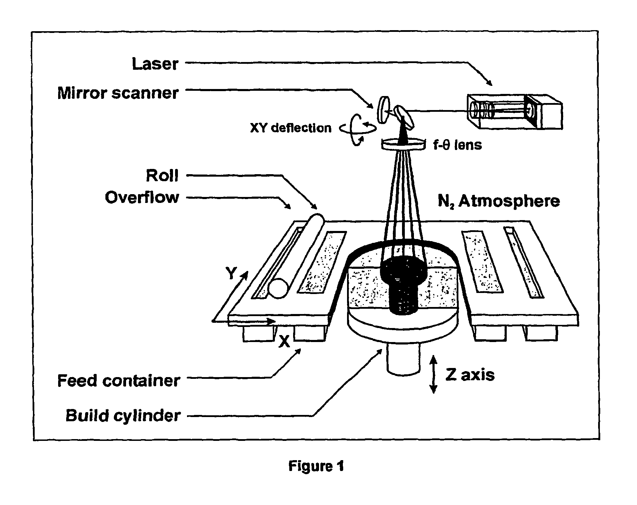

Selective Laser Powder Processing (SLPP) refers to a computer controlled production process that can be used to produce three-dimensional objects from powder material. Three-dimensional objects are programmatically divided in two-dimensional sections that are successively processed and connected together. In order to process a two-dimensional slice, a laser beam - that is being focussed towards a building platform - is deflected using computer controlled scanning mirrors. A powder deposition system, comprising a moving roller, a blade or any other powder spreading device and a powder container, is used to apply the successive powder layers on top of each other. Figure 1 shows the schematic layout of typical Selective Laser Powder Processing machine.

Different types of SLPP technologies exist, the most important being Selective Laser Sintering (SLS) and Selective Laser Melting (SLM). The Selective Laser Melting process distinguishes itself from the similar Selective Laser Sintering process, in that the powder that is being processed is completely molten, resulting in a zone of fully liquid material around the laser spot. In case of Selective Laser Sintering, at most a fraction of the powder material is molten. Either a single component powder is partially molten, thereby leaving un-molten particles or un-molten parts of particles, or a multiple component powder is used, in that case some materials melts, thereby binding other material particles that do not melt.

Although the SLPP technologies exhibit some similarities with 3D laser cladding-derived techniques, like Laser Engineered Net Shaping (LENS), Direct Metal Deposition (DMD), Shape Deposition Manufacturing (SDM), Direct Laser Fabrication (DLF), Selective Laser Cladding (SLC), Laser Beam Additive Manufacturing (LBAM), etc,- these technologies will be referred to as 'cladding-derived' technologies - the SLPP technologies are clearly different from the 'cladding-derived' technologies. Below a number of differences between the two technologies are given.
1. The material addition principle of the two technologies is different; whereas powder material is added by spreading successive powder layers that are scanned afterwards in SLPP, the material is added locally into the laser spot zone during the build-up stage in the cladding-derived technologies, either as a powder jet directed into the melt zone or as a wire being fed into the melt zone.
2. Cladding-derived technologies always need a substrate or support structure to build on, while in SLPP technologies a powder bed is available to build on. The presence of this powder bed allows to produce parts comprising overhangs without the need of support structures. Although the qualitiy such parts may be suboptimal using the currently available SLPP systems.
3. The scanning velocities in case of SLPP are orders of magnitude faster than these of cladding-derived technologies. Typical scanning velocities of SLPP range from 150 mm/s (SLM of high-melting materials) to 10000 mm/s (SLS of polymers), whereas typical scanning velocities of cladding-derived technologies range from 2 to 50 mm/s (e.g. 5 mm/s in 'Sensing, modeling and control for laser-based additive manufacturing.' D. Hu and R. Kovacevic, Int. Journal of Machine Tools and Manufacture, 43:51-60, 2003). The high scanning velocities of SLPP are possible thanks to the use of laser scanners for deviating the laser beam over the build area.

One of the major problems that are encountered in SLPP processes, especially in SLM, is the dross that is formed when overhang planes are scanned. This dross results from the large variation in conductive heat transport between powder material and the corresponding solid bulk material. As a result, overheating occurs at the overhang plane, since the heat sink is much too low compared to the added energy. Therefore, the melt zone becomes much too large and capillary and gravity forces result in liquid material spreading in the underlying powder material. After solidification, the dross remains and causes a very poor surface finish requiring a post treatment

An other problem that occurs in SLPP is the excess energy that is directed to the powder surface when small vectors are used to scan small features. If the size of the successive parallel and scan vectors becomes smaller, the time between successive passages of the laser beam at a certain location will be shorter than in case of long scanning vectors (since the scan spacing is chosen smaller than the laser spot size, a certain overlap exists and the laser will scan some material twice). Therefore, less time exist for conducting the heat away from the scanning area, and an accumulation of heat occurs. As a result, the melt zone may become too large and powder particles outside the part contour will also be consolidated, leading to geometric inaccuracies and superfluous material.

Other examples of defects that occur in SLPP technologies are the splitting of the melt zone, due to the surface tension driven Rayleigh instability, resulting in 'balling' effects and a bad surface quality or even in process breakdown and the problem of neighbouring powder particles being sucked into the melt zone due to capillary forces resulting in a melt track that is too wide and in a lack of powder next to the melt track.

In the current state of the art, commercial SLPP devices do not alter any of the available scanning parameters (like laser power, laser scanning velocity, laser spot diameter, etc.) during the scanning of a vector. At most, different types of scanning vectors are distinguished, that are each scanned with a different combination of scanning parameters, that are defined or set prior to the scanning of those vectors. For example, a distinction is made between the vectors that compose the contour of the two-dimensional slices and the vectors that fill the area of the two dimensional slice. A second example is the distinction between vectors that compose a down-facing plane with loose powder underneath, and other scanning vectors. Despite the possibility to allocate different parameters to different vector types, all current SLPP machines determine the scanning parameters of the different scanning vectors a priori, i.e. before the execution of the process. Once the process starts, all scanning parameters of each scanning vector are determined and can only be changed during the job by the operator. No possibility exists to automatically adapt the scanning parameters, during the execution of the process, based on information that can be extracted from the process. Defining different scanning parameter sets with corresponding different vector types, provides only a partial solution. Continuous variations of the border conditions cannot be compensated, and variations of the laser scanning parameters during the scanning of a vector are impossible. Moreover, fluctuations in e.g. powder absorption coefficient or room temperature, that cannot be predicted a priori, before the execution of the process, cannot be compensated without the use of feedback control.

US patent 6,815,636 B2 presents a method to feedback the temperatures at the sintering bed, in order to adapt the scanning parameters of the laser or to control a radiant heater above the powder bed. However, a fixed position thermal camera is used, that observes the temperature at different locations on the building zone in order to create a more uniform temperature distribution. The temperature at the moving sintering location is not measured.

US patent US6085122 describes a method to ensure a constant heat flux at the start and end points of a scanning vector in the Selective Laser Sintering process.

The laser power is adjusted to the actual laser scanning velocity to compensate for acceleration and deceleration of the laser spot at start and end points of the scanning vectors. The laser scanning velocity is the only parameter that is used as a feedback signal and no thermal parameters are used in the feedback loop.

The use of a feedback controller to improve the stability of the Selective Laser Sintering process was suggested in US patents 5.427,733 and 5,530,221 (also WO 95/11100 - EP 0 731 743 B1 - DE 694 09 669 T2). The same ideas are suggested in US patents 5,508,489 and 5,393,482, by the same inventors and applicants and in US patent 6,600,129 B2. These documents disclose a system wherein the temperature at a certain detection point in the sintering zone is maintained at a constant level by the feedback control loop. It was, however, observed that the area of the melt zone exhibits a higher variability than the temperature in the vicinity of the laser incidence point. However, the variation of the dimensions of the melt zone during the process is an important element in the final quality of the piece to be built. The present invention provides a system and method allowing controlling an SLPP process using a signal reflecting the melt zone geometry.

WO 95/11100 discloses a method according to the preamble of claim 10 and an apparatus according to the preamble of claim 1.

US 6,791,057 B1 teaches a method for producing workpieces by means of high-energy radiation, wherein the radiation is focused by a processing optic onto a processing site. The light radiation emanating form the workpiece is received by the same processing optic and is analyzed by a detector. The method is basically aimed for monitoring the keyhole of a laser welding process by measuring shape of part and weld seam with structured light projection.

### SUMMARY OF THE INVENTION

It is the aim of the present invention to provide an apparatus and method which makes it possible to solve the problems of the state of the art and to improve the quality of the piece to be built by controlling an SLPP process using a signal reflecting the melt zone geometry. The SLPP apparatus of the present invention comprises the elements of claim 1.

The selective laser powder processing apparatus according to the present invention comprises a building platform designed to comprise a powder bed and a powder deposition system for providing a powder surface on said building platform. The apparatus further comprises a laser apparatus for providing a focussed laser beam on the powder surface in order to partially or fully melt the powder within a melt zone. The apparatus further comprises a scanner for scanning the laser beam across the powder surface according to a given path. An optical system that follows the laser beam is used to transmit electromagnetic radiation emitted or reflected by a moving observation zone on the powder surface towards a detector, said moving observation zone comprising the incidence point of the laser beam on the powder surface. The signal obtained by the detector is used by a control apparatus to control the processing parameters of the laser beam or the laser scanning device.

In a preferred embodiment the apparatus is a Selective Laser Melting apparatus for fully melting the powder within the melt zone.

In another preferred embodiment the apparatus is Selective Laser Sintering apparatus for partially melting the powder within the melt zone.

In a preferred embodiment of the present invention the moving observation zone on the powder surface observed by the detector has preferably an area of at least 16 times the minimal laser spot area of the laser beam, more preferably an area of at least 36 times the minimal laser spot area of the laser beam, most preferably an area of at least 100 times the minimal laser spot area of the laser beam.

In a more preferred embodiment of the present invention said moving observation zone contains at least the whole melt zone.

In yet another preferred embodiment of the present invention the moving observation zone on the powder surface observed by the detector has preferably an area smaller than 500 times the maximal laser spot area of the laser beam, more preferably an area smaller than 200 times the maximal laser spot area of the laser beam, most preferably an area smaller than 100 times the maximal laser spot area of the laser beam.

The diameter of the laser spot of the laser beam of currently available laser equipment can range from 1 micrometer to 2 mm. Therefore, the area of the moving observation zone can vary between 50 µm² and 16 cm² depending on the processing conditions and the nature of the powder to be processed.

In a preferred embodiment the form of the observation zone is a rectangle, a square, a circle, triangle or any other regular or irregular form.

In yet another embodiment the active detection area of the detector has an active detection surface that is equal or larger in size than the projected dimensions of the moving observation zone projected on the detector.

In one embodiment the detector is an integrating detector, for example a photodiode. Such an integrating detector will generate a single output signal upon incidence of the electromagnetic radiation emitted or reflected by the moving observation zone. In another preferred embodiment the detector is a spatially resolved detector for providing 2D images of the melt zone. The 2D images are processed by an image processor for generating a geometric quantity of the melt zone. This signal reflecting a geometric quantity of the melt zone is then fed to the control system which controls the processing parameters of the laser beam or the scanning means of the laser beam. The geometric quantity of the melt zone which is determined by the image processor can be the area of the melt zone, the length of the melt zone, the width of the melt zone, the length-to width ratio of the melt zone, the number of distinct molten areas, or any other quantity reflecting the geometry of the melt zone. In a preferred embodiment a spatial temperature gradient can be considered as a geometric quantity that can be used for process control.

The processing parameter which can be adjusted by the present invention comprises the laser power and/or laser spot size of the laser beam. In case of a pulsed laser apparatus the processing parameters further comprise the laser pulse frequency, the laser pulse duration and/or shape of the laser pulse. The scanning velocity of the laser beam is a processing parameter of the scanning apparatus which can be adjusted by the control apparatus either on its own or in combination with a processing parameter of the laser beam.

The spatially resolved detector is preferably a camera, more preferably a high speed camera. In a preferred embodiment of the present invention the spatially resolved detector is a CMOS camera. In another preferred embodiment the spatially resolved detector is a CCD camera.

When a spatially resolved camera is used, the active detection surface of the camera can be adjusted by selecting the area of pixels to be read out from the whole chip of the camera in order to create an optimal active detection surface for detecting the electromagnetic radiation from the moving observation zone.

In a preferred embodiment of present invention the scanning means for scanning the laser beam is a galvano mirror scanner.

In yet another preferred embodiment of the invention the scanning means for scanning the laser beam is a galvano mirror scanner and the electromagnetic radiation emitted or reflected by a moving observation zone is transmitted by the galvano mirror towards the detector. The apparatus further comprises a semi-reflective mirror for separating the laser radiation from said emitted electromagnetic radiation. This semi-reflective mirror can either be a mirror reflecting the laser wavelength and transmitting the emitted electromagnetic radiation of the moving observation zone or a mirror transmitting the laser wavelength and reflecting the electromagnetic radiation of the moving observation zone. In order to capture as much of the radiation of the moving observation zone as possible, the mirrors of the laser scanner are preferably coated with a coating that has a high reflection coefficient at the laser wavelength as well as at the wavelengths of interest for observing the melt zone radiation.

In a preferred embodiment the apparatus comprises one or more beam splitters for dividing the electromagnetic radiation transmitted by the optical system towards at least two detectors. Any combination of integrating detectors or spatially resolved detectors can be used. In a preferred embodiment the electromagnetic radiation is divided towards a photodiode and a spatially resolved detector (e.g. CMOS or CCD camera). In order to compare recorded data sets of multiple detectors or in order to use the signals generated by multiple detectors in a feedback control loop, all detectors are preferably sampled simultaneously. In a preferred embodiment of the apparatus, this is ensured by triggering the camera frame-grabber and the analogue-digital converter of the photodiode using the same external triggering signal (e.g. a TLL triggering signal).

Optical filters can be used to select specific parts of the electromagnetic spectrum from the electromagnetic radiation. The use of these optical filters may have several advantageous, including blocking the fraction of laser radiation that is reflected on the melt zone surface and passes through the semi reflective mirror towards the detector, reducing spectral distortions of imaging lenses that would result in un-sharp images in case of a spatially resolved detector or selecting a specific observation wavelength thereby improving the temperature sensitivity according to Planck's law of spectral radiation. In the case of multiple detectors, common filters can be placed before the beam splitter and detector-specific filters can be placed after the beam splitter and just before the detector.

In an embodiment of the present invention, the apparatus comprises an external light source for illuminating the powder surface. The light rays reflected on the melt zone and surrounding material are transmitted by the optical system towards the detectors. Preferably said light source has a wavelength or a wavelength range distinct from the laser wavelength and the reflected light rays are separated from the laser beam by a semi-reflective mirror before reaching the detector. The detector used is preferably a spatially resolved detector in combination with an image processing apparatus for extracting useful information of the melt zone which can be fed into the control means of the apparatus.

In a preferred embodiment of the present invention the control apparatus comprises a control algorithm for determining the new process parameters of the laser beam or scanning means. This control algorithm can be for example a Proportional controller (P), Proportional-Integrative controller (PI) or Proportional-Integrative-Differential (PID) controller.

In yet another preferred embodiment the control algorithm is an adaptive or model based control algorithm. A theoretical or experimental determined process model can be used in the control apparatus as a more advanced control strategy leading to an improved performance.

The apparatus of the present invention can be used in the processing of many different types of powder material: polymers, metals, ceramics and any material or powder that combines two or more of these or other materials like combinations of polymer and metal, polymer and glas, polymer and ceramic, metal and ceramic, mixtures of various polymers, various metal, various ceramics, filled or reinforced whishers, etc.), independently from the fact that the starting powder is a mixture of powder particles of different materials or compositions or is formed by composite grains in which case the various materials are already available within a single powder particle (as nano-structures, nano-grains mixture, agglomerates, alloys, or other combinations). Each material category is meant to cover basically all subcategories. Just as an example: polymers include, but are not limited to thermosetting polymers, thermoplastic polymers, cristalyne polymers, amorphous polymers, elastomers, bio-compatible and biodegradable polymers, etc. Metals includes any pure or alloyed metal, ferrous or non-ferrous.

In a preferred embodiment a zoom lens or aperture can be placed within the optical path of the electromagnetic radiation in order to obtain an optimal moving observation zone on the powder surface. By changing the magnification of the zoom lens, an optimal observation zone can be obtained. This is an appropriate solution if e.g. multiple materials are used on the same SLPP installation, resulting in different maximal melt zone dimensions.

In a particular embodiment of the present invention the detector is a detector capable of detecting visible radiation (400nm-700 nm), near-infrared radiation (700nm-1200nm) or infrared radiation (1000nm-10000nm).

In a second object the present invention provides a method for controlling a Selective Laser Powder Process according to claim 10.

In a preferred embodiment of the present invention the moving observation zone on the powder surface observed by the detector has preferably an area of at least 16 times the minimal laser spot area of the laser beam, more preferably an area of at least 36 times the minimal laser spot area of the laser beam, most preferably an area of at least 100 times the minimal laser spot area of the laser beam.

In a more preferred embodiment of the present invention said moving observation zone contains at least the whole melt zone.

In yet another preferred embodiment of the present invention the moving observation zone on the powder surface observed by the detector has preferably an area smaller than 500 times the maximal laser spot area of the laser beam, more preferably an area smaller than 200 times the maximal laser spot area of the laser beam, most preferably an area smaller than 100 times the maximal laser spot area of the laser beam.

The diameter of the laser spot of the laser beam of currently available laser equipment can range from 1 micrometer to 2 mm. Therefore, the area of the moving observation zone can vary between 50 µm² and 16 cm² depending on the processing conditions and the nature of the powder to be processed.

In a preferred embodiment the form of the observation zone is a rectangle, a square, a circle, triangle or any other regular or irregular form.

In a preferred embodiment said detection signal is a 2D image of the observation zone and the method further comprises processing said 2D image for determining a geometric quantity of the melt zone and adjusting the processing parameters in response to said geometric quantity. The geometric quantity can be the total area of the melt zone, length of the melt zone, width of the melt zone, length-to-width ratio of the melt zone or the number of distinct molten areas.

The processing parameter which can be adjusted by the present invention comprises the laser power and/or laser spot size of the laser beam. In case of a pulsed laser beam the processing parameters further comprise the laser pulse frequency, the laser pulse duration and/or shape of the laser pulse. The scanning velocity of the laser beam is a processing parameter which can be adjusted either on its own or in combination with a processing parameter of the laser beam.

In an embodiment the method further comprising the step of transmitting said electromagnetic radiation to at least two detectors. Preferably the method further comprises the step of simultaneous sampling of said detectors.

In a preferred embodiment the method of the present invention comprises the step of directing an external light source towards the powder surface and detecting the light rays reflected by the melt zone and the surrounding material. The processing parameters of the laser beam or scanning means are adjusted in response to the obtained detection signal.

In a preferred embodiment the Selective Laser Powder Process is Selective Laser Melting.

In another preferred embodiment the Selective Laser Powder Process is Selective Laser Sintering.

In a specific embodiment the method of the present invention comprises filtering out the laser wavelength from said electromagnetic radiation. In another specific embodiment the method of the present invention comprises selecting a specific part of the spectrum of the electromagnetic radiation by filtering said electromagnetic radiation.

In one embodiment of the invention the integrating detector is a photo-diode or in case it is a spatially resolved detector, a CCD or CMOS camera should be used.

The scanning means can be comprise a galvano mirror scanner. The optical system comprises a semi-reflective mirror for separating said electromagnetic radiation from the laser radiation. The selective laser powder processing apparatus can be a selective laser melting apparatus for fully-melting said powder within the melt zone or a selective sinter apparatus for partially melting said powder within the melt zone. Further the laser beam means comprises means for controlling the power of said laser beam and wherein the control means controls the power of said laser beam in response to said detection signal. Furthermore, said laser beam means comprises means for controlling the laser pulse frequency of said laser pulse frequency of said laser beam and wherein the control means controls the laser pulse frequency of said laser beam in response to said detection signal. The control means controls the direction of the laser pulse of the laser beam in response to said detection signal. The laser beam means comprises means for controlling the shape of the laser pulse of the laser beam, the laser spot size of the laser beam, the scanning velocity of the laser beam and wherein the control means controls the shape of the laser pulse of said laser beam in response to said detection signal, the laser spot size of said laser beam in response to said detection or the scanning velocity of said laser beam in response to said detection signal.

The apparatus further comprises means for simultaneous sampling of said detectors, wherein said means for simultaneous sampling of said detectors comprises an external triggering signal to trigger the detectors. In a further embodiment said control means comprises a control algorithm for a determining the new parameters, wherein said control algorithm can be a Proportional controller, Proportional-Integrative controller or Proportional-Integrative Differential controller.

Said Detector is a detector for detecting visible radiation (typically 400 - 700 nm), for detecting near infrared radiation (700 - 1200 nm) or for detecting infrared radiation (typically 1000 - 10000 nm).

In another method of the invention the processing parameters comprise the scanning velocity of said laser beam. The method can comprise the step of transmitting said electromagnetic radiation to at least two detectors and/or comprise the step of simultaneous sampling of said detectors. The selective laser powder process is selective laser melting or a selective laser sintering. Another method feature of the invention comprises filtering out the laser wavelength from said electromagnetic radiation.

### DETAILED DESCRIPTION OF THE INVENTION

### Brief description of the drawings

Figure 1: schematic outline of a typical Selective Laser Powder Processing machine
Figure 2: possible outline of the coaxial process observation system, for the case of two detectors; Following items are indicated: 1 : working plane, 2: laser scanner, 3: 45 degree semi-reflective mirror, 4: laser output, 5: optical filter, 6: beam splitter, 7: optical filter, 8: CMOS camera with focusing lens, 9: optical filter, 10: photodiode module.
Figure 3: schematic outline of a feedback control system based on the information from the melt zone, captured by a photo diode.
Figure 4: schematic outline of a feedback control system based on the information from the melt zone, captured by a high-speed camera.
Figure 5: schematic observation zone of the photodiode: observation zone 1 does not measure variations in melt zone dimensions, since its dimensions are too small, observation zone 2 is large enough to measure variations in melt zone geometry.
Figure 6: example of a typical melt zone image before (left) and after (right) image processing; the white lines in the processed image indicate the longest and widest sections of the melt zone.
Figure 7: example of the use of the optical system for observing the effect op powder composition on the stability of the melt zone when scanning in loose powder material; left: pure Fe powder - right: Fe powder with 1 wt% Si.
Figure 8: example of a narrowing geometry, having scan vectors that become shorter towards the middle of the part.
Figure 9: comparison of the resulting melt zone size in case of fixed laser power versus proportional-integrative feedback-controlled laser power, for a narrowing geometry.
Figure 10: definition of the parallel scanning orientation: the scan lines of the vectors forming the overhang plane are oriented parallel to the white arrow.
Figure 11: definition of the perpendicular scanning orientation: the scan lines of the vectors forming the overhang plane are oriented parallel to the white arrow.
Figure 12: comparison of the melt zone geometry during parallel scanning of an overhang plane: left - melt zone in case of underlying solid material / right - melt zone at the overhang plane, with underlying powder material.
Figure 13: comparison of the diode output voltage (solid line) and the calculated melt zone area (dashed line) during parallel scanning of an overhang plane.
Figure 14: correlation between the diode output voltage and the calculated melt zone area.
Figure 15: photo-diode output signal and laser power during scanning of an overhang plane in parallel direction using proportional-integrative control.
Figure 16: comparison of the melt zone area during scanning of an overhang plane in parallel direction in case of fixed laser power (dashed line) versus proportional-integrative feedback control (solid line).
Figure 17: comparison of the resulting overhang geometries after parallel scanning for the case of fixed scanning parameters (top), proportional control of the laser power (middle) and proportional-integrative control of the laser power (bottom).
Figure 18: comparison of the fluctuations of the melt zone area during scanning of an overhang plane in perpendicular direction in the case of fixed scanning parameters (dashed line) versus the case of proportional-integrative control of the laser power (solid line).
Figure 19: comparison of the resulting overhang geometries after perpendicular scanning for the case of fixed scanning parameters (top), proportional control of the laser power (middle) and proportional-integrative control of the laser power (bottom).
Figure 20: comparison of the melt zone area during scanning of an overhang plane in parallel direction in case of fixed laser power versus proportional feedback control.
Figure 21: comparison of the melt zone area during scanning of an overhang plane in parallel direction in case of fixed laser power versus proportional feedback control.

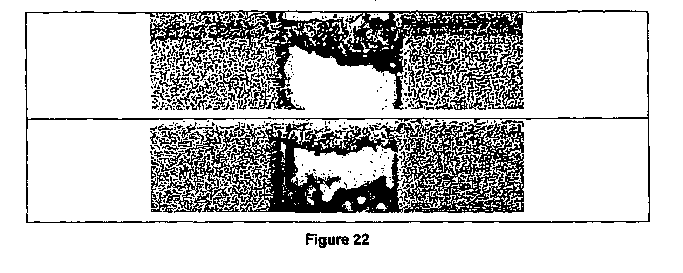

Figure 22: comparison of the resulting overhang geometries after parallel scanning for the case of fixed scanning parameters (top) and proportional control of the laser power (bottom).

### Definitions

"Selective Laser Powder Processing" refers to a layer-wise manufacturing technique that allows generating complex 3D parts by selectively consolidating successive layers of powder material on top of each other using the thermal energy of a laser beam that is focused on a powder bed. The energy that is added to the powder material is high enough to partially or fully melt the powder particles, thus a melt zone results in the vicinity of the laser spot.

"Adjustable process parameters" are the parameters that affect the behaviour of the material in the melt zone and that can be adjusted by the user or by the controller of the machine. Examples of adjustable process parameters are the laser power (in case of continuous radiation), laser pulse frequency, pulse energy, pulse duration or pulse shape (in case of pulsed radiation), scanning velocity, laser spot size, the powder preheating temperature, etc.

"Measured process variables" are the variables that are determined by the behaviour of the material in the melt zone and that are measured. Examples of measured process variables are the melt zone area, the melt zone length, the melt zone width, the melt zone length-to-width ratio, the number of distinct molten areas, etc.

In a preferred embodiment measured process variables further comprises the melt zone temperature (peak or mean temperature) and a temperature gradient.

"Scan spacing" is defined as the distance between successive parallel scan vectors.

"Feedback control" refers to a process control strategy whereby one ore more measured process variables are used to adapt one ore more adjustable process parameters during process execution.

'Melt zone' is defined as the zone around the moving laser spot, where heated material in the liquid state exists; this zone can be either an uninterrupted zone of liquid material or a zone consisting of a fraction of liquid or semi-liquid (viscous) material in between solid particles.

### Description

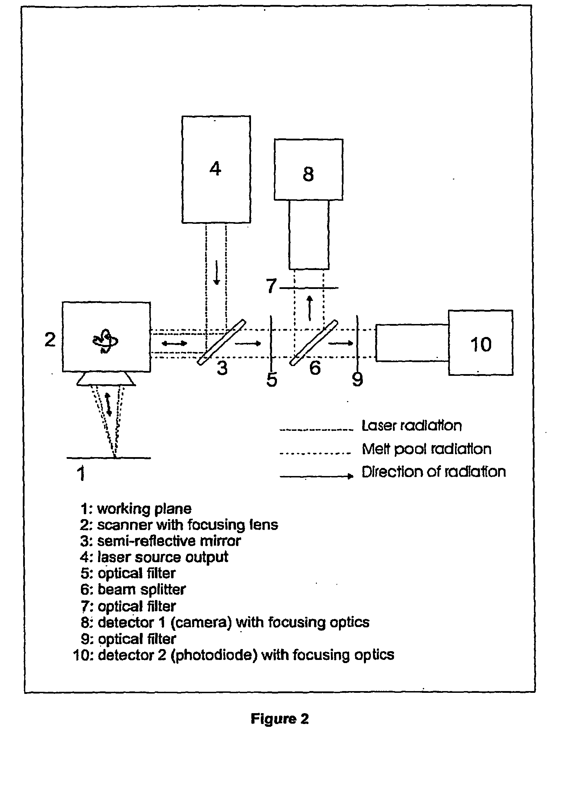

The present invention allows extracting useful process information from the melt zone of the SLPP process, using an optical system that follows an area containing the laser spot and melt zone, regardless of the movement of the laser beam over the working area. A coaxial optical system is used to capture the radiation that is emitted by the heated material in the melt zone around the laser spot. The spectral range of the emitted electromagnetic radiation depends on the temperature of the material in the melt zone according to Planck's law and will thus depend on the material being processed. Therefore, the wavelength of the radiation from the melt zone varies from the visible range (400-700nm) over the near-infrared (700-1200nm) and the infrared (1000-10000nm) depending on the process conditions and the nature of the material being processed. This radiation follows the inverse optical path as the laser beam, starting from the melt zone at the working plane, passing through the scanning lens then being reflected by the laser scanning mirrors towards a semi-reflective mirror that is used to separate the emitted melt zone radiation from the laser radiation (Figure 2).

The electromagnetic radiation is transmitted by the optical system towards a spatially resolved detector (e.g. a CCD or CMOS camera) or an integrating detector (e.g. a photo-diode with a large active area) providing a single output value. In one embodiment the optical system has a beam splitter (number 6 in Figure 2) for dividing the transmitted radiation towards two different detectors, one being a spatially resolved detector, one being an integrating detector providing a single output value. However, also two spatially resolved or two integrating detector, as well as more than two detectors, either spatially resolved or integrating, can be used as well.

Figure 2 shows a schematic representation of one possible outline of the coaxial process monitoring system. This outline uses a beam splitter that reflects the laser radiation and transmits the melt zone radiation towards two different detectors, each receiving a fraction of the emitted melt zone radiation.

Optical filters can be used to select specific parts of the electromagnetic spectrum for different reasons, including blocking the fraction of laser radiation that is reflected on the melt zone surface and passes through the semi reflective mirror (nr. 3 in Figure 2) towards the detectors, reducing spectral distortions of imaging lenses that would result in un-sharp images in case of a camera-detector or selecting a specific observation wavelength thereby e.g. improving the temperature sensitivity according to Planck's law of spectral radiation. In the case of multiple detectors, common filters can be placed before the beam splitter(s) and detector-specific filters can be placed after the beam splitter and just before the detector.

In the current embodiment of the system, the camera frame-grabber and the analogue-digital converter are triggered simultaneously by using the same external TTL triggering signal.

Instead of recording electromagnetic radiation emitted from the melt zone material, a light source illuminating the work plane may as well be used to capture images of the melt zone. The wavelength or wavelength range of the light source being used should be distinct from the laser wavelength. This way, the lights rays being reflected on the melt zone material and the surrounding solidified and powder material are transmitted by the scanning system and can again be split from the laser light by a semi-reflective mirror. In this case, preferably a spatially resolved camera detector is used in order to extract the useful geometric information of the melt zone. Image processing algorithms are then used to detect the edge of the melt zone and to determine the geometric characteristics of the melt zone. Using this approach enables the detection of the melt zone characteristics in case of low melting powder materials (e.g. aluminium and even polymers) that do not emit enough radiation in the visible and near-infrared region where standard CCD or CMOS detectors are sensitive. The use of the coaxial optical system for observation and feedback control purposes is identical to the case of observation of the emitted electromagnetic radiation of the melt zone material.

The configuration of the optical system and the active detection surface of the detector is constructed in such a way that the detector receives electromagnetic radiation emitted or reflected by a moving observation zone on the powder surface comprising at least the incidence point of the laser beam on the powder and having an area of preferably at least 16 times the laser spot area. In a more preferred embodiment the moving observation zone contains at least the whole melt zone. The detection signal is used to improve the stability of the SLPP process and the quality of the resulting SLPP parts, by using the detected signal to control the SLPP process in real-time. One or several of the adjustable process parameters can be used to counteract fluctuations of the melt zone geometry.

The process variable that is recorded by the detector is a measured value indicative of a geometric quantity of the melt zone e.g. the area of the melt zone. This information can be extracted from the images resulting from the camera detector, e.g. by calculating the number of pixels above a threshold value that corresponds to the melt temperature. This threshold value can be determined experimentally for a certain material. A method to determine the melt zone grey level, comprises producing single line tracks with the SLPP technique while capturing the melt pool the produced tracks, the melt zone grey level can be determined. These calculations can be performed at high speed during the SLPP process by using the on-board image processing features of a digital frame-grabber, although all image processing can also be done in software, without the use of dedicated image (pre-) processing hardware.

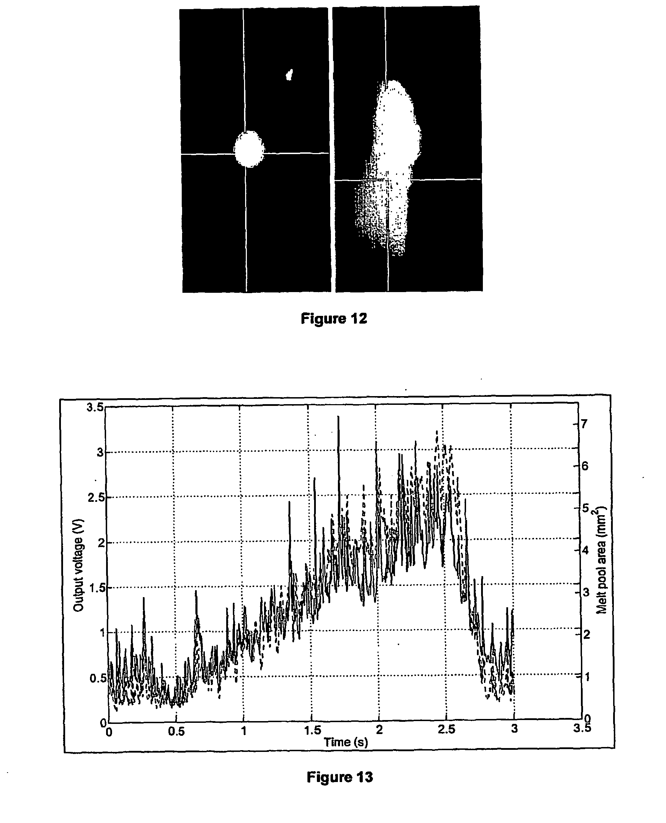

A signal indicative for the area of the melt zone can also be recorded using an integrating detector like a photo-diode with a large active area and an appropriate lens that focuses radiation emitted from the whole melt zone area around the laser spot on the active area of the integrating detector. The detector will thus measure variations in the melt zone temperature (according to Planck's law of spectral radiation) as well as variations in the melt zone area. Typically, the variations in the area of the melt zone are much larger than variations of the melt zone temperature, thus the signal of the integrating sensor will correlate mostly with the melt zone area. For SLM of titanium, for example, the melt temperature equals 1940K. The maximum temperature that can be reached in the melt zone is 3560K, i.e. the boiling point of the material. Therefore, variations in melt temperature are limited to 83.5% of the melt temperature. However, experiments prove that, e.g. in case of an overhang plane, the variations in melt zone dimensions during an SLM job, can be up to 1200% (range from about 0.5 mm² melt zone area to about 6 mm², see Figure 13). Therefore, a signal indicative of the melt zone area will be more useful to control the SLPP process, than a signal indicating the melt temperature.

In a preferred embodiment the photodiode receives radiation that is emitted from a moving observation zone around the laser spot, said observation zone having a preferably an area of at least 16 times the laser spot area. In another preferred embodiment the moving observation zone contains at least the whole melt zone. In a more preferred embodiment the photodiode receives radiation that is emitted from a zone around the laser spot, with a dimension that is at least as large as the maximal melt zone that is expected for the specific material that is being processed using a given SLPP equipment.

The signals from either a spatially resolved sensor like a CMOS or CCD camera or from an integrating sensor like a planar photo-diode, are used to identity one or more measured process variables reflecting the area of the melt zone or some other geometric quantity of the melt zone. Such process variable is then compared with a desired value that can be experimentally determined, and the difference between the process variable and the desired value is used to adjust one or more adjustable process parameters. Depending on the type of sensor used, the measured process or a "discrete" variable (e.g. a parameter indicating whether a single continuous melt zone exists, or multiple melt zones, indicating the occurrence of Rayleigh instability or 'balling'). Within each control loop, a certain control algorithm is used to calculate the new value(s) of the adjustable process parameter(s) based on the current and/or previous values of the measured process variable. For example a PID controller can be used, but more advanced control strategies, like adaptive or model based controllers, are also possible and might lead to a better performance.

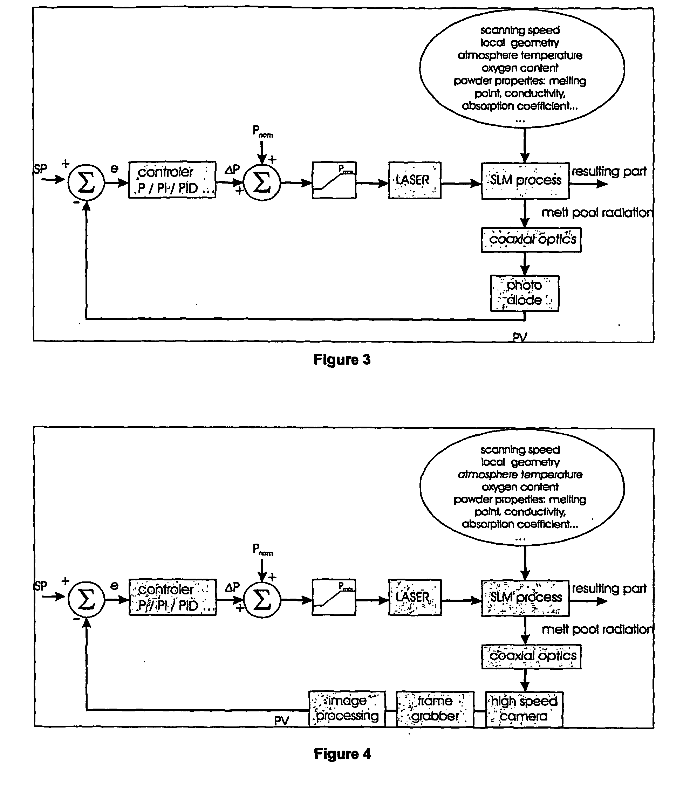

A schematic outline of the control scheme using a photodiode as its sensing element and the laser power as the adjustable process parameter is shown in Figure 3. Figure 4 shows a similar feedback control system, using a camera to deliver the measured process variable. In the latter case, each individual melt zone image is processed using dedicated hard- or software to extract a signal reflecting a geometric quantity of the melt zone that is then used as process variable in the control loop.

In order to avoid large fluctuations of the melt zone geometry due to changing border conditions during e.g. scanning of overhang planes or during scanning of small features involving changing vector lengths, a signal indicative for the total area of the melt zone is the most suitable control parameter. For these purposes an integrating sensor like a large-area planar photodiode may be used as well as a spatially resolved sensor like a high-speed camera.

In a preferred embodiment, a spatially resolved detector in combination with an appropriate image processing apparatus can be used to avoid break-up of the liquid melt zone due to the Rayleigh instability. The length-to-width ratio of the melt zone is the preferred processing parameter to be controlled.

### Illustrative embodiment and application examples

Following illustrations show how the coaxial optical system can be used in case of the Selective Laser Melting process, to either observe the process or to actively control the process by adapting one or more adjustable process parameters based on the information recorded by a detector from the optical system. As a first illustration, a possible embodiment of the sensor system will be described. Next, a SLM monitoring experiment will be described and finally, the use of the sensor system for feedback process control will be illustrated.

### Example 1: possible embodiment of the coaxial optical system

Figure 2 shows a possible realization of the coaxial optical system. Following items 4: laser output, 5: optical filter, 6: beam splitter, 7: optical filter, 8: CMOS camera with focusing lens, 9: optical filter, 10: photodiode module. The photodiode that is used in this realization is a planar photodiode with an active area of 10mm by 10mm. The use of this large integrating area, together with the use the specific lens system, ensures that radiation is captured by the photodiode from a zone of about 4mm by 4mm around the moving laser spot. The dimensions of the area around the laser spot that is projected on the photodiode may differ from 4mm by 4mm. However, an observation zone that is too large may cause the photodiode to capture radiation from heated or molten material at a certain distance that does not belong to the melt zone. In that case, the process variable that is measured might be distorted by the radiation of the other molten or heated material, and the use of this process variable for feedback control might result in incorrect corrective action of the controller. Therefore, preferably an optimal observation zone is selected for the photodiode.

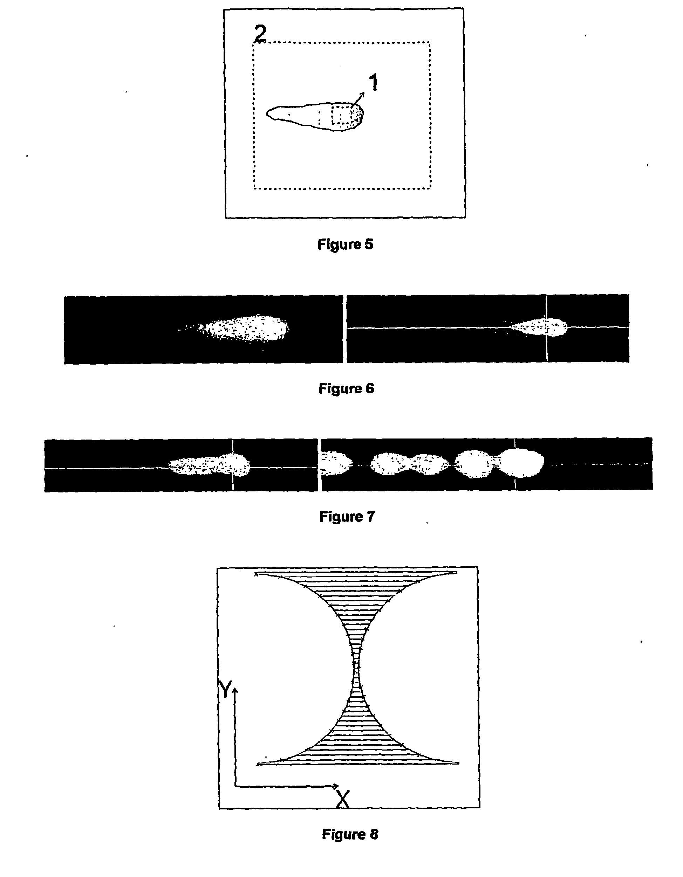

Preferably, the melt zone will not become larger than the observation zone because none of the radiation emitted from outside the observation zone will reach the photodiode. In that case, only variations in melt zone temperature are recorded, and the melt zone geometry is not observed. This is illustrated in Figure 5 that schematically represents a melt zone with two possible observation zones. Observation zone 1 does not measure variations in melt zone dimensions, since its dimensions are smaller than the melt zone. Therefore the photodiode signal will not depend on the melt zone geometry and only temperature variations are recorded. On the other hand, observation zone 2 is large enough to measure variations in melt zone geometry. Instead of using a square observation zone, other shapes like e.g. a rectangular or circular observation zone are possible as well.

In a preferred embodiment the photodiode receives radiation that is emitted from an observation zone around the laser spot, with a dimension that is at least as large as the maximal melt zone that is expected for the specific material that is being processed using a given SLPP equipment. In order to determine the appropriate dimensions of an integrating sensor like a planar photodiode and/or the sensor's focussing optics, the expected maximum melt zone dimensions can be estimated. This maximal melt zone can be estimated in different ways, e.g. using an analytical or Finite Element model, or an other numerical model. If a spatially resolved detector like a CCD or CMOS camera is available, the maximal melt zone dimensions can also be determined experimentally, by recording melt zone images during the SLPP process and determining the melt zone dimensions from the recorded images afterwards. In order to determine the maximal melt zone dimensions that will occur in powder processing technologies, this means that the case of scanning in a loose powder bed is preferably considered, because in that case, the heat conduction away from the melt zone is very small, resulting in a much larger melt zone, compared with scanning on top of a substrate. The lowest scan velocity and the highest laser power that will be used in normal practise are preferably used, in order to obtain the largest melt zone that may occur.

In case of an analytical or a Finite Element calculation, the parameters of the material being used can be estimated, measured or calculated. The number of parameters to be determined depends on the model being used (e.g. one numerical model will include the latent heat of fusion, while another model may not include this parameter). If different materials will be processed with the SLPP process, the calculations or experiments are preferably performed for each of the different materials, in order to obtain the maximal melt zone dimensions.

An example of an analytical model that can be used is the classical moving-heat source model developed originally by Rosenthal (Rosenthal D., The Theory of Moving Source of Heat and its Application to Metal Transfer, Transactions ASME 1946, pp. 849-866) or one of the refined models based on it. As an example of a Finite Element model, the melt zone dimensions were calculated for pure iron powder, using the Abaqus^{™} FEM package. The transition from powder to solid material was incorporated by using a temperature-history dependent relative density (50% if the melting point is not reached during the calculation steps, 100% if the melting point is reached) and a rise of the element conductivity based on the temperature history, to account for the neck-formation between the powder particles (= Solid State Sintering), that raises the powder bed conductivity. Also, the variation of the laser absorptance due to the transition from powder to liquid state as well as the latent heat of fusion are incorporated in the model. The results of the Finite Element Model were also validated experimentally. The modelled melt zone widths corresponded sufficiently well with the measured widths. Of course, the accuracy of the calculated melt zone dimensions will depend on the accuracy of the parameters that are used. However, the calculated melt pool dimensions provide an estimation of the real melt pool dimensions, that is accurately enough to use for calculating the appropriate sensor dimensions and/or the sensor focusing optics.

Once the dimension of the moving observation zone is determined, the dimension can be used to determine the appropriate dimensions of the integrating sensor and - if necessary - the appropriate focussing lens. Therefore, classical geometric optics calculations can be performed. The radiation of the melt zone is focused towards the The scanning mirrors, the semi-reflective mirror and the beam-splitter are all flat and therefore they do not influence the convergence or divergence of the emitted melt zone radiation. The whole system can thus be represented as an imaging system consisting of an object (the melt zone) at a known distance from a first lens (the scanning lens), possibly a second lens and finally the detector. The scanning lens that focuses the laser beam is usually a 'flat field' lens (a flat field lens is a lens having a flat instead of a spherical focal plane; this lens type is used in many SLPP processes, to ensure that the laser beam remains focused when the beam is deflected over the working area), with a certain focal length that is specified at the laser wavelength. In order to obtain an estimate of the projected melt area dimensions, this focal length can also be used at the detection wavelength(s). The exact focal length of the scanning lens at a single detection wavelength (determined by the sensor spectral sensitivity and the spectral filters that can be used) can also be determined experimentally, if the scanning lens exhibits large chromatic aberrations.

Geometric optics theory can then be used either to calculate the appropriate lens for the integrating detector of a given size at a given position, or to calculate the optimal position and/or size of the detector for a given lens. It might even be possible that - by choosing the right position of an integrating detector of given size or by choosing the right size for a detector at a given position - that the second lens before the detector is not required.

For an integrating sensor, it is not required that the detector is put exactly at the position of the object's image. However, preferably all emitted radiation that passes through the scanning lens is projected on the detector area.

Instead of using a lens with a fixed focal distance, a zoom lens can also be used as the second lens; in that case, the magnitude of the observation zone can be changed by changing the focal length of the zoom lens system. This is an appropriate solution if e.g. multiple materials are used on the same SLPP installation, resulting in different melt zone dimensions.

The observation zone of the spatially resolved detector - in this case a Dalsa 1 M75 CMOS camera - is selected in such a way that an observation of melt zone dimension variations is possible. Thus, by using the appropriate lens system, an area of a few millimetres around the laser spot is projected onto the camera chip. Since modern digital cameras allow to read out only a certain part of the whole chip area (called 'windowing'), the exact observation zone can be selected by selecting which pixels to read. This is illustrated in Figure 6, where only a zone of 400 by 100 pixels advantage of being able to position the observation zone around the laser spot and to change the size of the observation zone to a desired size, thereby eliminating useless pixels and reducing the data size. Moreover, reading out only part of the chip generally results in a higher achievable frame rate compared to reading out the whole chip, thus higher loop rates may be achieved in case of closed loop control using the digital camera.

### Example 2: use of the coaxial optical system for observation and study of the Selective Laser Melting process

The coaxial optical system can be used to observe and study the behaviour of the melt zone of the SLM process. This may be done for several reasons, including studying the stability of the melt zone and the influence of the process parameters (like scanning velocity and laser power), studying the effect of the powder composition on the melt zone shape and stability, etc.

For these purposes, a camera detector is preferably used instead of an integrating sensor. Figure 7 shows an example of a melt zone observation experiment using the high speed CMOS camera. Two experiments were done to examine the influence of the addition of a small amount of silicon to an iron powder mixture. All scanning and process parameters were identical for the two experiments, the only difference being the powder composition. It is clear that the addition of a small amount of silicon powder to the iron powder material, results in a large increase of the melt zone area. In this case the melt zone even becomes so elongated that Rayleigh instability occurs; the camera detector clearly observes that the melt zone splits up in several individual melt area's (i.e. 'balling'). The raise of the melt zone area could be attributed to the exothermal oxidation reaction between the silicon and the rest oxygen in the processing chamber.

### Example 3: Feedback control of SLM of Ti6Al4V powder in case of scanning a narrowing geometry

Figure 8 shows an example of a scanning geometry that results in a large variation of the length of the scanning vectors. If the geometry is scanned from top to bottom with parallel vectors along the X direction, then the length of the scanning vectors is large at the starting point, becomes very small towards the middle, to become larger again towards the end at the bottom. In case of fixed process parameters, the time between successive passages of the laser beam is large in case of long vectors, but short in case of small vectors. The scan spacing is exaggerated in Figure 8 in order laser spot diameter, to ensure a certain overlap between successive scan tracks and to avoid porosity in between these successive tracks.

In case of long scanning vectors, enough time exists for the molten or heated material to cool down - through heat conduction and heat radiation - before the laser passes again at the same X location. In the case of short vectors, the cool down times are too short and the material of the previous track is still at high temperature when the laser scans the next track. Therefore, the total amount of molten material will be larger in case of short scanning vectors than in the case of long scanning vectors.

In addition to the effect of the changing cool down time, also the local part geometry has an important effect. Since the conduction rate of loose powder material may be a factor 100 smaller than the conduction rate of the solidified material, the amount of solid material around the melt zone has an important influence on the melt zone dimensions. In the middle of the part of Figure 8 for example, almost no solid material is available to conduct the heat away from the melting zone, whereas at the beginning of the scanning (except for the first scan tracks), a lot of solidified material is available. For these two reasons, it may be expected that - in case of fixed scanning parameters - the melt zone geometry will become larger towards the middle of the part, to become smaller again, after passing the middle zone towards the end of scanning.

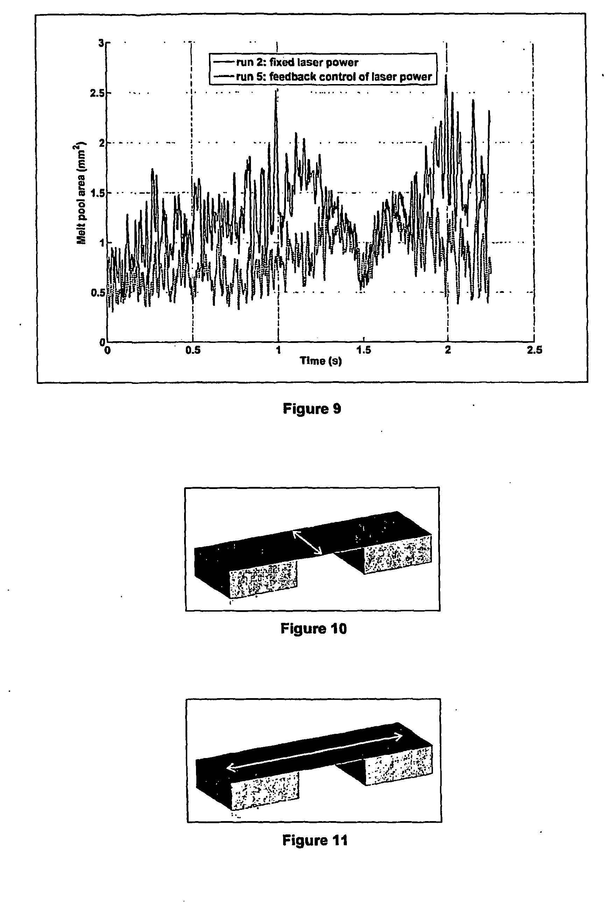

Figure 9 shows a comparison between the melt zone area in case of fixed power and in case of the proportional-integrative controller. Due to limited image buffer size, only a sequence of 900 images is recorded and processed. Therefore, the relative timescale of Figure 9 does not start at the beginning of the scanning of the geometry.

Figure 9 shows a dip of the melt pool area at the middle zone. This can be attributed to the fact that the scan vectors become so small in the middle zone of the part, that the setting time of the laser begins to play a role; since the laser is switched on and off during the scanning of a single vector, very short scanning vectors that are scanned at high velocities receive less energy than intended. It can be seen from Figure 9 that laser power feedback control stabilizes the melt pool behaviour since the expected raise of the melt pool area from the starting point towards the middle of the part is drastically reduced when feedback is applied.

### Example 4: Feedback control of SLM using the photodiode based control loop in case of scanning overhang planes in Ti6Al4V powder

A second example of changing border conditions is the scanning of overhanging much lower compared to the heat conduction of the underlying solid material, resulting in an increase in melt zone dimensions. If the scanning parameters are kept constant during scanning, the melt zone will thus enlarge when passing the overhang zone due to a lack of heat conduction. Due to gravity and capillary forces, the liquid molten material will sink into the overhang zone, resulting in the formation of dross material at the bottom of the overhang plane.

Two different scanning orientations were used to scan an overhang zone of a rectangular part. Figure 10 defines the 'parallel' scanning orientation; Figure 11 defines the 'perpendicular' orientation. The test samples that were scanned were rectangular blocks of 15 by 5 mm in X and Y direction respectively, with an overhang zone of 5 by 5 mm in the middle. The parts were always scanned in a zigzag-scanning pattern; the scanning direction reverses for each successive vector. During the feedback control tests, that used the photo-diode output signal as measured process variable correlating to the melt zone area, the high-speed camera was used to record the melt zone images, in order to evaluate the efficiency of the feedback controllers with respect to the melt zone dimensional stability. A laser spot with a diameter of 0.2 mm was used in these experiments.

### Effect of feedback control in case of parallel scanning orientation

Figure 12 compares the melt zone geometry before and during the scanning of the overhang plane with constant scanning parameters. The left image shows the melt zone in a non-overhang zone, having solid material below. The right image shows the melt zone near the end of the overhang zone, with loose powder below. It can be seen that melt zone is much larger at the overhang zone, due to the lack of heat conduction.

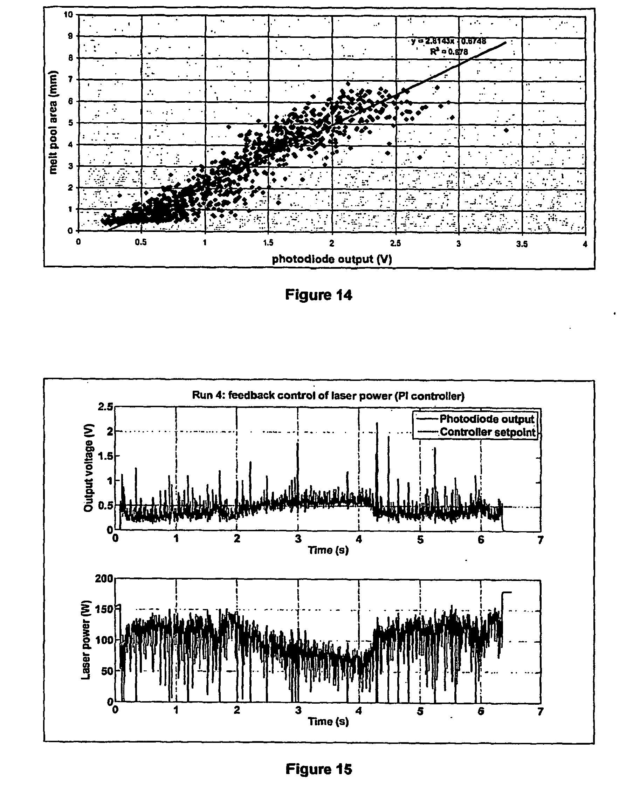

During the same overhang scanning experiment we performed a comparison of the photodiode signal and the calculated melt zone area obtained by image processing of the 2D images of the melt zone captured by the CMOS camera. From Figure 13 it can be seen that both signals follow the same trend, also many common peaks are visible in the signals. This indicates that the photodiode signal essentially represents the melt zone area. The same conclusion follows from Figure 14, that shows the correlation between the photodiode output signal and the calculated melt zone area.

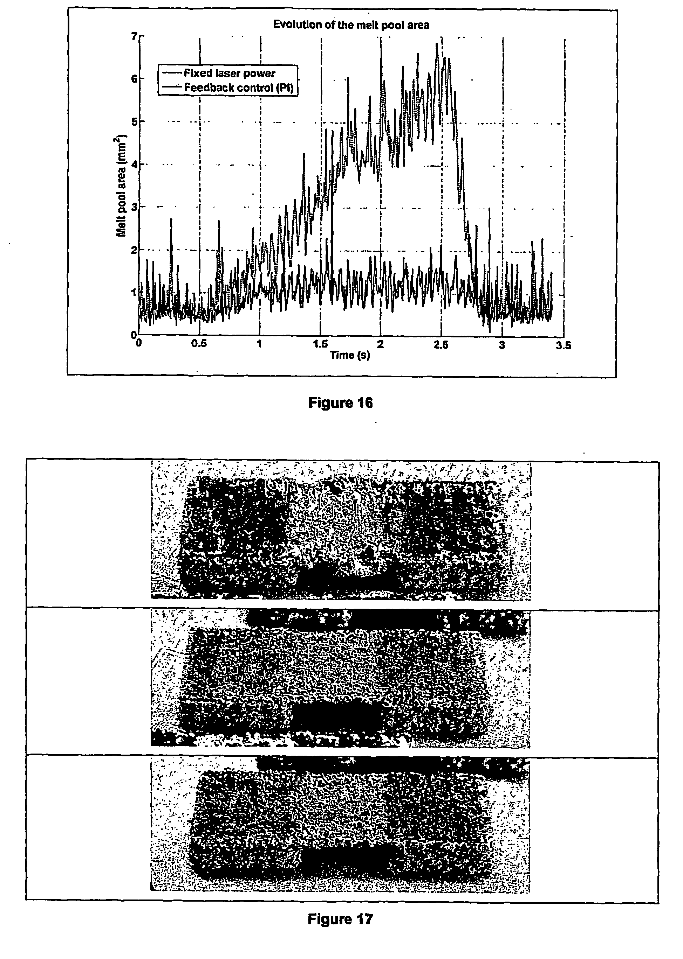

To avoid the large fluctuation of the melt zone geometry and the resulting bad part geometry, feedback control, using the measured photodiode signal (itself correlating to the melt zone area), was used. The set point for the photo-diode output signal was 0.5V, corresponding approximately to the photo-diode output value for the fixed Figure 15 shows the photo-diode output signal and laser power during scanning of the overhang plane when a proportional-integrative controller is used. It can be seen in Figure 15 that the laser power is reduced significantly in the middle part of the scanning, i.e. during the scanning of the overhang zone. Figure 16 compares the melt zone area of the PI-controlled test, with the fixed scanning parameter test. It is clear that the fluctuations of the melt zone geometry are much less in the case of feedback control, than in the fixed parameter case. The diameter of the laser spot used in this experiment was equal to 0.2 mm.

Finally, Figure 17 presents the resulting part geometries for three different cases. The top picture shows the resulting geometry in case of fixed scanning parameters. It can be seen that the top surface is very irregularly shaped and a lot of dross material is attached to the bottom plane of the overhang. Moreover, partially molten powder particles are attached to the overhang plane at the front and back side, due to the excess of energy that is added.

The middle picture shows the resulting geometry in case of proportional feedback control and the bottom picture shows the resulting geometry in case of proportional-integrative control. It is clear that both feedback controllers result in a much flatter overhang plane. Also, the amount of dross material at the bottom and the front and back side are drastically reduced.

### Effect of feedback control in case of perpendicular scanning

As indicated in Figure 11, the overhang plane can also be scanned perpendicularly. In that case, each individual scan vector passes the overhang plane. Thus, the border conditions of the process change very rapidly, during the scanning of a single vector. Therefore the perpendicular scanning direction is harder to control than the parallel scanning direction.

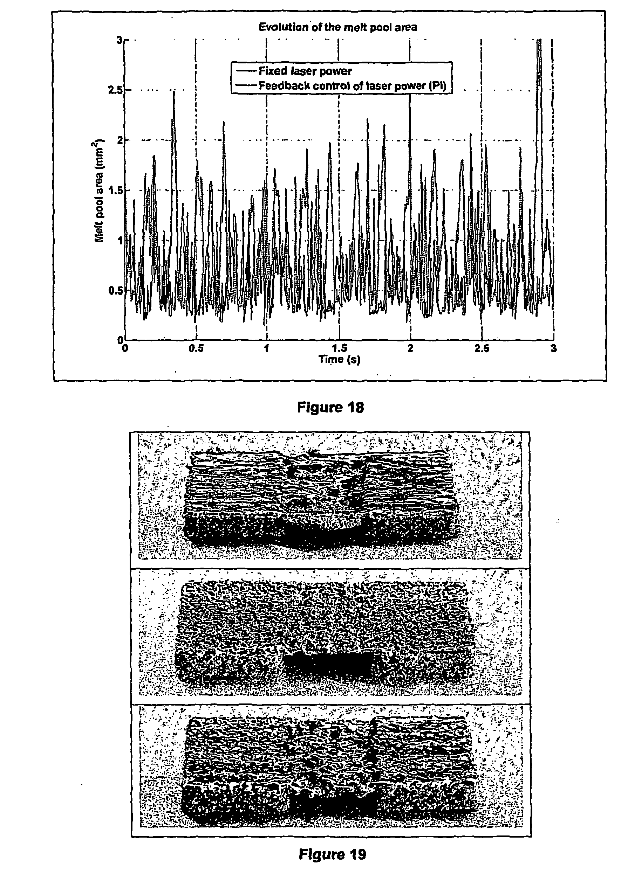

However, the use of feedback control can clearly improve melt pool stability, as shown in Figure 18, that compares the melt pool area in case of fixed laser power with the melt pool area in case of proportional-integrative feedback control.

Figure 19 compares the resulting part geometries for the two different control strategies and the case or fixed scanning parameters. The top picture shows the resulting part geometry in case of fixed scanning parameters. It can be seen that surface of the overhang plane is very irregular, with many holes. A lot of dross material is attached to the bottom of the overhang plane, and also at the front of the part (where the scanning starts), where a lot of partially molten and sintered powder material is attached to the plane, due to the excessive heat input at the overhang feedback control. It is clear that the overhang plane is much more regular compared with the fixed parameter case. Also, no dross material is attached to the overhang plane. The bottom picture shows the resulting geometry in case of proportional-integrative feedback control. Again, the plane is much more regular than compared with the fixed parameter case; however, some irregularities are also present in this overhang plane.

### Example 5: Feedback control of SLM using the CMOS camera based control loop in case of scanning overhang planes in stainless steel powder

Using a spatially resolved detector like a CMOS or CCD camera allows to use more or other monitoring and feedback parameters than the melt zone area, like e.g. melt zone length, width or length-to-width ratio in conjunction with appropriate control strategies. Such a detector also allows to determine whether the melt zone spits up into several area's (due to Rayleigh instability; see Figure 7 right) and to identify the geometric properties of these distinct areas or the number of distinct molten areas. Figure 6 (right image) illustrates the length and width of the melt zone.

The feedback control in the previous illustration was based on the use of the photodiode as a sensor for measuring the melt pool area. The melt pool area can be measured more directly by the high-speed CMOS camera as sensing element in the feedback loop. The obtained 2D images are further processed by image processing in order to determine a geometric quantity of the melt zone which can be used on the feedback loop. The process variable in this case is the number of pixels with grey value above the melt grey level. This melt grey level can be determined experimentally by measuring a scan track of one layer of powder on a base plate, and comparing this measurement with the camera images taken during the scanning of that track. The amount of pixels above the threshold multiplied with a geometrical factor is a number representing the melt pool area. The principle of the feedback control is then exactly the same as in the photodiode based control loop. In case of the feedback control during the scanning of overhang planes using the CMOS camera based control loop, the same conclusions can be drawn as with using the photodiode based control loop.

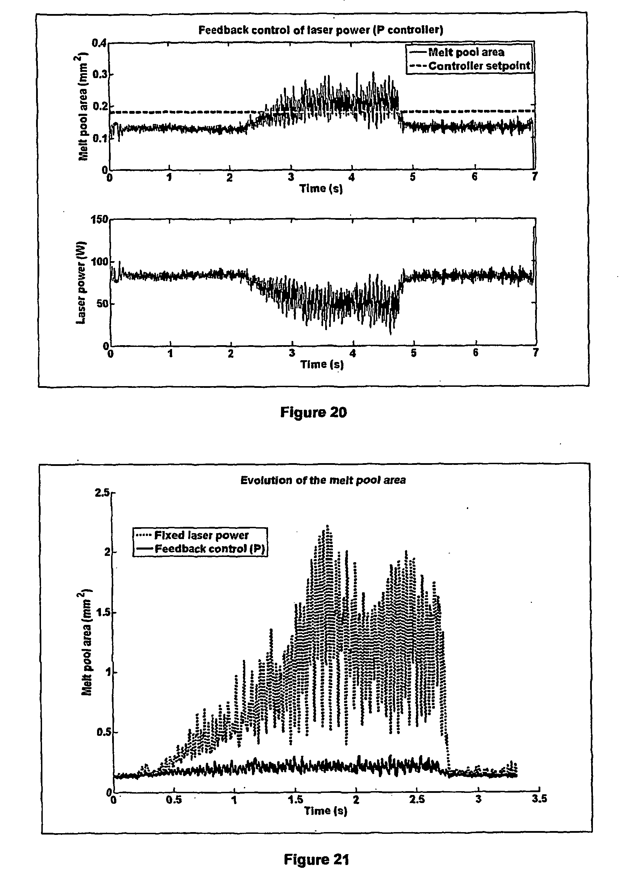

Figure 20 shows the calculated melt pool area, which is in this case used directly as process variable and the laser power, for an overhang planed scanned horizontally. Figure 21 compares the performance of the proportional controller with the fixed parameter test, for melt zone area variations. It can be seen that the melt zone area variations are much less when feedback control is used, compared to the fixed proportional control strategy and the case of fixed scanning parameters. The top picture shows the resulting part geometry in case of fixed scanning parameters. The bottom picture shows the resulting geometry in case of proportional feedback control, where less dross material is visible at the bottom surface.

## Claims

1. A Selective Laser Powder Processing apparatus comprising:
a. a building platform (1) which can comprise a powder bed;
b. a powder deposition system for providing a powder surface on said building platform (1);
c. laser beam means (2, 4) for providing a focused laser beam incident on said powder surface allowing to partially or fully melt the powder within a melt zone;
d. scanning means (2) for scanning said laser beam across said powder surface;
e. a detector (8, 10) for capturing electromagnetic radiation emitted from or reflected by the powder surface;
f. an optical system that follows the laser beam for transmitting said radiation towards said detector; and
g. control means responsive to said detection signal for controlling said laser beam means or said scanning means
**characterized in that**
said detector is adapted to capture electromagnetic radiation emitted from or reflected by a moving observation zone on the powder surface, said moving observation zone having an area of at least 16 times the minimal laser spot area of said laser beam and said moving observation zone surrounding the laser spot area on the powder bed.

2. The apparatus of claim 1 wherein the detector (8, 10) has an active detection surface that is equal or larger in size than the projected dimensions of the moving observation zone projected on the detector surface.

3. The apparatus of any of the previous claims wherein said detector (8, 10) is an integrating detector for receiving electromagnetic radiation from the moving observation zone and providing a single output.

4. The apparatus of any of the claims I to 2 wherein said detector (8, 10) is a spatially resolved detector (10) for providing 2D images of the observation zone and wherein said detector (10) further comprises image processing means for determining a geometric quantity of the melt zone from said 2D images for providing a control signal for controlling said laser beam means (2,4).

5. The apparatus of claim 4 further comprising means for selecting the area of pixels to be read out from the whole chip of the camera (8).

6. The apparatus of any of the previous claims wherein said optical means further comprises optical filters (5, 7, 9) for selecting specific parts of the electromagnetic spectrum of the electromagnetic radiation.

7. The apparatus of any of the claims 4-6 further comprising an external light source for directing external light towards the powder surface and wherein the detector (8, 10) detects the electromagnetic radiation from said external light source which is reflected by the material of the melt zone and the surrounding material.

8. The apparatus of any of the previous claims wherein said optical means further comprises means (6) for dividing said electromagnetic radiation towards at least two detectors (8, 10).

9. The apparatus of any of the claims 4-8 wherein said geometric quantity of the melt zone is the area of the melt zone, length of the melt zone, width of the melt zone, length-to-width ratio of the melt zone or the number of distinct molten areas.

10. A method for controlling a Selective Laser Powder Process, comprising the steps of
a. directing a laser beam on a powder surface for fully or partially melting the powder within a melt zone;
b. scanning said laser beam across said powder surface according to a given path;
c. detecting electromagnetic radiation emitted from or reflected by a moving observation zone on said powder surface;
d. adjusting the processing parameters of the laser beam or scanning means in response to the detection signal obtained in step (c),
**characterized in that**
said moving observation zone comprising at least the incidence point of the laser beam on the powder surface and having an area of at least 16 times the minimal laser spot area of said laser beam, whereby said moving observation zone surrounding the laser spot area on the powder bed.

11. The method of claim 10 wherein said detection signal is a 2D image of the moving observation zone and the method further comprising processing said 3D image for determining a geometric quantity of the melt zone and adjusting.

12. The method of any of the claims 10-11 wherein said processing parameters comprise the laser power, lasers spot size, laser pulse frequency, duration of the laser pulse or shape of the laser pulse of said laser beam.

13. The method of any of the claims 10-12 further comprising directing an external light source towards the powder surface and detecting the electromagnetic radiation reflected by the melt zone and the surrounding material.

14. The method of any of the claims 11-13 wherein said geometric quantity is the total area of the melt zone, length of the melt zone, width of the melt zone, length-to-width ratio of the melt zone, the number of distinct molten areas.

15. The method of any of the claims 10-14 further comprising selecting a specific part of the spectrum of the electromagnetic radiation by filtering said electromagnetic radiation.

## Patentansprüche

1. Vorrichtung zur selektiven Laserpulververarbeitung, die Folgendes umfasst:
a. eine Bauplattform (1), die ein Pulverbett umfassen kann;
b. ein Pulverbeschichtungssystem zum Auftragen einer Pulveroberfläche auf die Bauplattform (1);
c. Laserstrahlmittel (2, 4) zur Bereitstellung eines fokussierten Laserstrahls, der auf die Pulveroberfläche auftrifft und ein teilweises oder vollständiges Schmelzen des Pulvers innerhalb einer Schmelzzone ermöglicht;
d. eine Abtasteinrichtung (2) zum Ablenken des Laserstrahls über der Pulveroberfläche;
e. einen Detektor (8, 10) zur Erfassung elektromagnetischer Strahlung, die von der Pulveroberfläche abgegeben oder reflektiert wird;
f. ein optisches System, dass dem Laserstrahl folgt, zur Transmission der Strahlung in Richtung des Detektors und
g. Steuerungsmittel, die auf das Erfassungssignal zur Steuerung des Laserstrahlmittels oder der Abtasteinrichtung reagieren,
**dadurch gekennzeichnet, dass**
der Detektor derart ausgebildet ist, dass dieser elektromagnetische Strahlung erfasst, die von einem beweglichen Beobachtungsbereich auf der Pulveroberfläche abgegeben oder reflektiert wird, der bewegliche Beobachtungsbereich eine Fläche aufweist, die mindestens 16 Mal so groß ist wie die minimale Laserfleck-Fläche des Laserstrahls und der bewegliche Beobachtungsbereich die Laserfleck-Fläche auf dem Pulverbett umgibt.

2. Vorrichtung nach Anspruch 1, wobei der Detektor (8, 10) eine aktive Erfassungsoberfläche aufweist, die gleich groß oder größer ist als die projizierte Dimensionierung des beweglichen Beobachtungsbereichs, der auf die Detektoroberfläche projiziert wird.

3. Vorrichtung nach einem der vorhergehenden Ansprüche, wobei es sich bei dem Detektor (8, 10) um einen integrierten Detektor handelt, zum Empfangen elektromagnetischer Strahlung von dem beweglichen Beobachtungsbereich und zur Bereitstellung eines einzigen Ausgangs.

4. Vorrichtung nach einem der Ansprüche 1 - 2, wobei es sich bei dem Detektor (8, 10) um einen ortsauflösenden Detektor (10) handelt, zur Bereitstellung von 2D Bildern des Beobachtungsbereichs, wobei der Detektor (10) weiter Bildverarbeitungsmittel umfasst, zur Bestimmung einer geometrischen Größe der Schmelzzone von den 2D Bildern, zur Bereitstellung eines Steuerungssignals zur Steuerung der Laserstrahlmittel (2, 4).

5. Vorrichtung nach Anspruch 4, die weiter Mittel zur Selektierung einer Pixelfläche umfasst, die von dem gesamten Chip der Kamera (8) ausgelesen wird.

6. Vorrichtung nach einem der vorhergehenden Ansprüche, wobei das optische Mittel weiter optische Filter (5, 7, 9) umfasst zur Selektierung spezifischer Teile des elektromagnetischen Spektrums der elektromagnetischen Strahlung.

7. Vorrichtung nach einem der Ansprüche 4 - 6, die weiter eine externe Lichtquelle umfasst, zur Ausrichtung des externen Lichtes in Richtung der Pulveroberfläche, wobei der Detektor (8, 10) elektromagnetische Strahlung von der externen Lichtquelle erfasst, die durch das Material der Schmelzzone und das umgebende Material reflektiert wird.

8. Vorrichtung nach einem der vorhergehenden Ansprüche, wobei das optische Mittel weiter Mittel (6) umfasst, zur Teilung der elektromagnetischen Strahlung in Richtung der mindestens zwei Detektoren (8, 10).

9. Vorrichtung nach einem der Ansprüche 4 - 8, wobei die geometrische Größe der Schmelzzone die Fläche der Schmelzzone, die Länge der Schmelzzone, die Breite der Schmelzzone, das Verhältnis Länge zu Breite der Schmelzzone oder die Anzahl der deutlich geschmolzenen Bereiche ist.

10. Verfahren zur Steuerung einer selektiven Laserpulververarbeitung, das folgende Schritte umfasst:
a. Ausrichten eines Laserstrahls auf eine Pulveroberfläche zum vollständigen oder teilweisen Schmelzen des Pulvers innerhalb einer Schmelzzone;
b. Ablenken des Laserstrahls über der Pulveroberfläche entsprechend eines vorgegebenen Weges;
c. Erfassen elektromagnetischer Strahlung, die von einem beweglichen Beobachtungsbereich auf der Pulveroberfläche abgegeben oder reflektiert wird;
d. Einstellen der Prozessparameter des Laserstrahls oder der Abtasteinrichtung als Antwort auf das in Schritt c. gewonnene Erfassungssignal,
**dadurch gekennzeichnet, dass**
der bewegliche Beobachtungsbereich mindestens den Einfallspunkt des Laserstrahls auf der Pulveroberfläche umfasst sowie eine Fläche aufweist, die mindestens 16 Mal so groß ist wie die minimale Laserfleck-Fläche des Laserstrahls, wobei der bewegliche Beobachtungsbereich die Laserfleck-Fläche auf dem Pulverbett umgibt.

11. Verfahren nach Anspruch 10, wobei es sich bei dem Erfassungssignal um ein 2D Bild des beweglichen Beobachtungsbereichs handelt und das Verfahren weiter die Verarbeitung des 3D Bildes umfasst, zur Bestimmung einer geometrischen Größe der Schmelzzone und deren Einstellung.

12. Verfahren nach einem der Ansprüche 10 - 11, wobei die Verarbeitungsparameter die Laserstärke, die Laserfleckgröße, die Laserimpulsfrequenz, die Dauer des Laserimpulses oder die Form des Laserimpulses des Laserstrahls umfassen.

13. Verfahren nach einem der Ansprüche 10 -12, das weiter das Ausrichten einer externen Lichtquelle in Richtung der Pulveroberfläche umfasst sowie das Erfassen elektromagnetischer Strahlung, die durch die Schmelzzone und das umgebende Material reflektiert wird.

14. Verfahren nach einem der Ansprüche 11 - 13, wobei die geometrische Größe die gesamte Fläche der Schmelzzone, die Länge der Schmelzzone, die Breite der Schmelzzone, das Verhältnis Länge zu Breite der Schmelzzone, die Anzahl der deutlich geschmolzenen Bereiche ist.

15. Verfahren nach einem der Ansprüche 10 - 14, das weiter die Selektierung eines spezifischen Teils des Spektrums der elektromagnetischen Strahlung durch Filterung der elektromagnetischen Strahlung umfasst.

## Revendications

1. Un appareil pour le traitement sélectif de poudre laser, comprenant
a. une plateforme de construction (1) qui peut comprendre un lit de poudre;
b. un système de revêtement par poudre pour appliquer une surface de poudre sur ladite plateforme de construction (1);
c. des moyens de faisceau laser (2, 4) pour la mise à la disposition d'un faisceau laser focalisé arrivant de façon incidente sur ladite surface de poudre, afin de faire fondre la poudre en partie ou entièrement dans une zone de fusion;
d. des moyens de balayage (2) conçus pour produire un balayage dudit faisceau laser à travers ladite surface de poudre;
e. un détecteur (8, 10) pour saisir le rayonnement électromagnétique émis ou reflété par la surface de poudre;
f. un système optique qui suit le faisceau laser pour la transmission dudit rayonnement en direction dudit détecteur et
g. des moyens de commande réagissant au signal de détection afin de commander lesdits moyens de faisceau laser ou lesdits moyens de balayage,
**caractérisé en ce que**
ledit détecteur est conçu pour saisir le rayonnement électromagnétique émis ou reflété par une zone d'observation mobile sur la surface de poudre, ladite zone d'observation a une superficie qui a au mois 16 fois la taille de la superficie minimale du spot laser dudit faisceau laser et ladite zone d'observation mobile entoure la superficie du spot laser sur le lit de poudre.

2. L'appareil selon la revendication 1, sachant que le détecteur (8, 10) a une surface de détection active qui est de la même taille ou plus grande que les dimensions projetées de la zone d'observation mobile projetée sur la surface du détecteur.

3. L'appareil selon l'une des revendications précédentes, sachant que ledit détecteur (8, 10) est un détecteur intégré pour recevoir des rayonnements électromagnétiques de la zone d'observation mobile et pour la mise à la disposition d'une seule sortie.

4. L'appareil selon l'une des revendications 1 à 2, sachant que ledit détecteur (8, 10) est un détecteur (10) pour la détection à résolution locale pour la mise à la disposition des images 2D de la zone d'observation, sachant que ledit détecteur (10) comprend en outre des moyens de traitement d'images pour déterminer une quantité géométrique de la zone de fusion desdites images 2D pour mettre à la disposition un signal de commande pour commander lesdits moyens de faisceau laser (2, 4).

5. L'appareil selon la revendication 4, comprenant en outre des moyens pour sélectionner une superficie de pixels qui est lue par le chip entier de la caméra (8).

6. L'appareil selon l'une des revendications précédentes, sachant que ledit moyen optique comprend en outre des filtres optiques (5, 7, 9) pour sélectionner des parties spécifiques du spectre électromagnétique du rayonnement électromagnétique.

7. L'appareil selon l'une des revendications 4 à 6, comprenant une source lumineuse externe pour diriger la lumière externe en direction de la surface de poudre, sachant que le détecteur (8, 10) détecte le rayonnement électromagnétique de ladite source lumineuse externe qui est reflété par le matériau de la zone de fusion et le matériau autour de la zone de fusion.

8. L'appareil selon l'une des revendications précédentes, sachant que le moyen optique comprend en outre des moyens (6) pour diviser ledit rayonnement électromagnétique en direction des au moins deux détecteurs (8, 10).

9. L'appareil selon l'une des revendications 4 à 8, sachant que ladite quantité géométrique de la zone de fusion est la superficie de la zone de fusion, la longueur de la zone de fusion, la largeur de la zone de fusion, le rapport longueur/largeur de la zone de fusion ou le nombre des zones sensiblement fondues.

10. Procédé pour la commande d'un traitement sélectif de poudre laser, comprenant les étapes suivantes:
a. diriger un faisceau laser sur une surface de poudre, afin de faire fondre la poudre en partie ou entièrement dans une zone de fusion;
b. balayer ledit faisceau laser à travers la surface de poudre correspondant à un parcours donné;
c. détecter des rayonnements électromagnétiques émis où reflétés par une zone d'observation mobile sur ladite surface de poudre;
d. ajuster les paramètres de processus du faisceau laser ou des moyens de balayage en réponse au signal de détection obtenu dans c.,
**caractérisé en ce que**
ladite zone d'observation mobile comprend au moins le point d'incidence du faisceau laser sur la surface de poudre et ladite zone d'observation mobile a une superficie qui a au moins 16 fois la taille de la superficie minimale du spot laser du faisceau laser, sachant que ladite zone d'observation mobile entoure la superficie du spot laser sur le lit de poudre.

11. Procédé selon la revendication 10, sachant que ledit signal de détection est une image 2D de la zone d'observation mobile et que le procédé comprend en outre le traitement de l'image 3D pour déterminer une quantité géométrique de la zone de fusion et son ajustement.

12. Procédé selon l'une des revendications 10 à 11, sachant que lesdits paramètres de processus comprennent la puissance du laser, la taille du spot laser, la fréquence d'impulsion laser, la durée d'impulsion laser ou la forme d'impulsion laser dudit faisceau laser.

13. Procédé selon l'une des revendications 10 à 12, comprenant en outre diriger une source lumineuse externe en direction de la surface de poudre ainsi que détecter le rayonnement électromagnétique reflété par la zone de fusion et le matériau autour de la zone de fusion.

14. Procédé selon l'une des revendications 11 à 13, sachant que ladite quantité géométrique est la superficie entière de la zone de fusion, la longueur de la zone de fusion, la largeur de la zone de fusion, le rapport longueur/largeur de la zone de fusion, le nombre des zones sensiblement fondues.

15. Procédé selon l'une des revendications 10 à 14, comprenant en outre la sélection d'une partie spécifique du spectre du rayonnement électromagnétique par filtrage dudit rayonnement électromagnétique.
